# EUROPEAN PATENT APPLICATION

(11) **EP 4 807 345 A1**
(43) Date of publication of application: **16.09.2026**
(21) Application number: 25162887.1
(22) Date of filing: 11.03.2025
(51) Int. Cl.: G01N 21/25, G01N 21/84

(54) **DEVICE AND METHOD FOR INSPECTING LENS MATERIAL PIECES**

(71) Applicant: Carl Zeiss Vision International GmbH, 73430 Aalen (DE)
(72) Inventor: HOWARD, Ian, 76344 Eggenstein-Leopoldshafen (DE); BRAIG, Felix, 76344 Eggenstein-Leopoldshafen (DE); BLAESI, Johannes, 76344 Eggenstein-Leopoldshafen (DE); WINDBIEL, Julian, 73430 Aalen (DE)
(74) Representative: Kraus & Lederer PartGmbB

(57) **Abstract**

A device for lens inspection is provided including a light source (18), a spectrometer device (14) and a carrier (12) carrying and moving lens material pieces (13). A stationary diffuse reflector (17) reflects light from the light source (18) through the lens material pieces (13) to the spectrometer device (14)

## Description

The present application relates to devices and methods for inspecting lens material pieces.

In the production of lenses, for example eyeglass lenses, lenses are sometimes discarded as they do not meet quality standards. Also, when manufacturing lenses from a block of material, scrap material accumulates. Besides high-end lenses, where special glass materials may be used material used for lenses like eyeglass lenses also includes plastic materials. Furthermore, various coatings may be applied to lenses and material used for manufacturing lenses to provide various functions to the lens, like antireflective coatings.

The term "lens material piece" is used herein to refer to lenses, semi-finished lenses, discarded lenses, discarded lens material remaining when manufacturing lenses, lenses after use, lenses in frames after use (the two latter e.g. returned to an optician or manufacturer after use), the aforementioned both with and without one or more coatings.

For re-using discarded lens material, it is desirable to be able to sort the lens material by material, i.e. base material type (plastic, glass, etc.) and possible coatings applied. Also in other circumstances, it may be desirable to determine material and coatings of a lens retrospectively.

In the context of sorting plastic materials, spectroscopic methods are known to be used. For example, US 5 365 075 A discloses a device for automated identification of plastic articles to be recycled. A collimated light beam is directed onto plastic particles provided on a conveyor belt, and both transmitted light and diffusely reflected light is measured.

Applying this scheme to lens material pieces is difficult, as such pieces generally have a high optical quality. Therefore, there is often hardly any diffuse reflection, and the small amount of diffuse reflection still present also in high-quality lenses often is not sufficient for detection. Moreover, for example discarded lenses exhibit refraction essentially according to their design, which may for example refract a transmitted light beam and prevent the transmitted light beam from reaching a detector. This refraction may also depend on the position of the lens.

US 2024 / 117 972 A1 discloses a system and method for identification and sorting of plastics, where plastic materials are moved on a conveyor belt, illuminated with a diverging light source from a greater distance, and where diffusely reflected light is captured in a spectrometer. Again, capturing diffuse radiation is difficult for lens material as high-quality lens material exhibits little diffuse reflection. Furthermore, with this approach it is difficult, if not impossible, to examine certain spots on a material, as reflected light may arrive at the spectrometer from essentially every point of the plastic material.

US 2014 / 0 160 472 A1 discloses a further inspection apparatus, where several focused light beams are directed on plastic material and captured by a sensor. This approach relies on a sufficiently diffuse reflection of the plastic material such that sufficient light intensity reaches the sensor. Again, this is often not the case for lens material due to the high optical quality thereof.

US 2007 / 029 232 A describes a device for classifying objects in waste using a hyperspectral line scan, where a camera first scans an input waste stream and outputs pixelated image data to a processor. This provides a tracking functionality. Furthermore, a hyperspectral camera scans the material. No specific information is given how light sources are positioned for the hyperspectral imaging, so no solution is given to the problem of only low diffuse reflection or refraction of light by lens material, which is no surprise as the system is directed at classifying conventional waste material.

Similar systems are disclosed in, WO 96 06 689 A2, WO 00 57 160 A1 and WO 2005 / 106 438 A1. Here, light scattering within a material is used. As mentioned, in lens material, there is little diffuse light scattering.

Therefore, while the above solutions may work well for sorting, scanning or identifying random plastic waste, they are hardly suitable for inspecting lens material pieces, due to the low diffuse reflection of lens material pieces and possible refractive properties which change in a direction of reflected light beams, which may cause them to miss a detector.

US 2006 / 01 02 528 A1 discloses an automatic inspection system for objects traveling on a conveyor belt as a support, which is specifically directed at transparent objects. To analyze transparent objects, the support, for example conveyor belt, is adapted to reflect light from a light source which passes through a transparent object on the conveyor belt in a diffuse manner, such that the diffusely reflected light passes through the transparent object again, and part of the light is then captured by a detector.

As the conveyor belt transports the transparent objects, the conveyor belt may get dirty, which impedes the capability of diffusely reflecting the light. To solve this problem, US 2006 / 0 102 528 A1 proposes to add a cleaning station, which is an additional device. Furthermore, if background measurements are performed between objects (i.e. when no object is in an inspection area on the support), this is taken at a different spot on the support than the actual measurement, which may have different diffuse reflecting capabilities, for example due to the support becoming dirty at places as explained above. This makes such background or reference measurements unreliable.

Starting from this document US 2006 / 0 102 528 A1, it is therefore an object to provide a device for inspecting lens material pieces which enables more precise reference measurements.

To achieve this object, a device for inspecting lens material pieces is provided, comprising:
a carrying device configured to transport lens material pieces to be inspected through an inspection area,
light providing element at a first side of the carrying device and configured to provide a diverging illumination, and
a spectrometer device at a second side of the carrying device opposite the first side and configured to analyze light which is diffusely reflected by the diffuse reflector through a lens material piece in the inspection area.

The device is characterized in that the light providing element is stationary with respect to the spectrometer device.

By providing a stationary light providing element, in contrast to US 2006 / 0 102 528 A1 reference measurements may be performed at approximately the same point of the reflector as the actual measurements of lens material pieces (with slight deviations possible due to the optical properties of lens material pieces), making the reference measurements more reliable.

The light providing element in a preferred embodiment comprises a diffuse reflector. In this case, the device further comprises a light source for illuminating the diffuse reflector. The light source preferably is located at the second side of the carrying device.

Diffuse reflection means that the angle under which the light is reflected is essentially independent from the incidence angle and may be within an angular range of, for example, 30° or 45° around a respective incidence angle. Such diffuse light is also to be understood as diverging in the context of the present application. For example, the diffuse reflector may be a white diffuse reflector. The diffuse reflector may be designed to diffusely reflect at least 50%, preferably at least 70%, of light received in a spectral range the spectrometer device is configured to analyze.

Alternatively, the light providing element may comprise a light source configured to generate a diverging light beam, for example in an angular range of at least 30°, preferably at least 45°.

A spectrometer device is a device which includes one or more spectrometers together with optics, to collect light and guide the light to the one or more spectrometers. The spectrometer may then perform a wavelength-resolved measurement of the received light. By such a spectrally resolved measurements, as also described in the prior art references mentioned in the background, different materials, for example base material of the lens material pieces or coating materials of the lens material pieces, may be determined, and therefore lens material pieces may be classified. The use of more than one spectrometer may broaden the spectral range examined, if different spectrometers for different spectral ranges are used. Spectral ranges may include infrared ranges or visible ranges. For example, a spectrum in the infrared range may be used to identify a base lens material, while a spectrum in the visible range may be used to identify coatings.

For example, lens materials which may be identified in this way include the base lens materials listed in the table below, together with the respective index of refraction:

| Material | Index of refraction |
|---|---|
| Polyallyldiglycolcarbonate | 1.50 |
| Polyamide | 1.52 |
| Polyurethane/Polyurea | 1.53 |
| Polyallyl | 1.56 |
| Polycarbonate | 1.59 |
| Polythiourethane (MR8) | 1.60 |
| Polythiourethane (MR7) | 1.67 |
| Episulfide | 1.74 |

In addition, various coating and treatments may be identified, like polarized coating, coating absorbing specific light ranges (colored coatings), etc.

The optics of the spectrometer device may, for example, comprise a telescope optics, such that essentially light coming from a spot on the light providing element is analyzed by the spectrometer device. The telescope optics may be coupled to the one or more spectrometers using fiber optics or other optical elements.

The light source - either for illuminating the diffuse reflector in case the light providing element comprises the refuse reflector or the light source comprised in the light providing element - may be a broadband light source which emits at least in the spectrum to be analyzed and may, for example, include a halogen lamp. Other light sources like LED-based light sources may also be used as long as they emit in the spectrum to be analyzed with sufficient intensity, such that the part of the light reaching the spectrometer device can be analyzed.

The carrying device is a device which can transport the lens material pieces through the inspection area. An example for such a carrying device is a conveyor belt. In another example, the carrying device may include grippers for gripping lens material pieces, which grippers are attached to a moving element, which may again be a conveyor belt-like element, an inclined plane, chute, or gravity feed system, or also robot arms or the like. By moving lens material pieces through the inspection area where they can be inspected, a high throughput, for example 1 to 5 lens material pieces per second, may be achieved.

Lens material pieces, as explained already in the background portion, may include lenses with or without coatings, parts thereof or scrap material remaining in the fabrication of lenses. They may also be mounted in frames, with the carrying device transporting the framed lenses in such a way that the frames do not interfere with a light path for inspecting the lens material pieces, i.e. from light source via the diffuse reflector through the lens material pieces or from the light source comprised in the light providing element through the lens material pieces to the spectrometer device.

In a preferred implementation, the light providing element is arranged at a position such that the lens material pieces in operation of the device do not touch the light providing element. In this way, pollution of the light providing element by the lens material pieces may be avoided or at least mitigated.

As mentioned above, the carrying device may comprise a conveyor device. In a particularly preferred implementation, the conveyor device comprises a first track and a second track parallel to the first track and configured to carry the lens material pieces bridging the first track and the second track. The light providing element may be positioned in a gap between the first track and the second track. In this way, central portions of the lens material pieces, i.e. portions bridging the gap between the first and second track, may be examined, a compact arrangement may be achieved, and the light providing element may be placed at a distance to the lens material pieces to avoid pollution of the light providing element.

However, other arrangements are also possible. For example, lens material pieces may be transported on a conveyor belt in an upright position, spectrometer device may be positioned at one side of the conveyor belt, and the light providing element may be positioned on the opposite side of the conveyor belt.

As mentioned above, for example using a telescope optics, the spectrometer device may be configured to analyze light which is provided in a diverging manner from a spot on the light providing element. In this way, one or more points on the lens may be examined.

For example, the spectrometer device may be configured to collect and analyze light from the lens material piece in the inspection area repeatedly while the lens is moved by the lens carrying device through the inspection area, and when only light from a spot in the inspection area is collected, in this way several measurement points on the lens material may be captured along a line. This may improve a classification of the lens material through repeated measurements.

In an embodiment, the light providing element is arranged such that it generates a diverging light beam which widens from a diameter at the spot by no more than 600% at the lens material piece and by more than 1000% at a light capturing entrance of the spectrometer device, for example at an entrance of the telescope optics. This means that the diameter of the light beam from the spot is comparatively small at the lens material piece, such that the lens material piece may be examined locally but is widened more at the light capturing entrance of the spectrometer device. This in turn means that a comparatively wide area is covered by the beam at the light capturing entrance, such that when the direction of the beam is changed due to refractive properties of the lens material piece, still light reaches the light capturing entrance. Generally, the light capturing entrance is an entrance where light enters the spectrometer device, which may for example be defined by an aperture.

To achieve this relationship between the diameters, the light providing element may be placed close to the carrying device and therefore close to lens material pieces carried by the carrying device. Preferably, a distance of the light providing element from the carrying device is smaller than 20% of a distance between the carrying device and the light capturing entrance of the spectrometer device.

The device may further comprise a processing device configured to classify the lens material pieces based on measurement data received from the spectrometer device, thus providing a classification of the material, for example to discriminate between the materials mentioned above. The processing device may also control the device, for example to perform the reference measurements as explained above.

While such an analysis of the spectra may be performed in any conventional way, for example as described in the references mentioned in the background, a possible approach will be briefly described in the following:
The raw data collected by a spectrometer of the spectrometer device can be seen as a vector X(λ), a measured count X as a function of wavelength λ.

To calculate the fraction of light absorbed by the lens material piece at each wavelength, the amount of light at each wavelength without the lens material piece is needed. This is done by recording the spectrum when no lens material piece is present, only using the light providing element. This is named white reference data W(λ) here.

When then the lens material piece under inspection is present a measurement vector S(λ) is recorded.

Taking $\frac{S \left(λ\right)}{W \left(λ\right)}$ then gives the fraction of light absorbed at each wavelength, which then can be processed to identify the materials. By using the stationary reflector, the quality of W(λ) can be improved as essentially the same spot is measured for S(λ) and W(λ).

Real devices have an offset in the recorded vectors X(λ) (i.e. S(λ) and W(λ)) even when no light impinges on the detector (light source turned off, dark room). To get the correct absorption ratio therefore this dark reference is measured. For this simply all light to the spectrometer device is blocked a spectrum D(λ) is recorded.

Now the correct optical absorption is $\frac{S \left(λ\right) - D \left(λ\right)}{W \left(λ\right) - D \left(λ\right)}$

Note that it is sufficient to measure a signal proportional to the absorption, i.e., $k \frac{S \left(λ\right) - D \left(λ\right)}{W \left(λ\right) - D \left(λ\right)}$

This means that changes in the fraction of light returned to the imaging system due to differing refractions of lenses are not important

For analysis, then a negative logarithm of this correct optical absorption above may be calculated to give a so-called pseudo-absorbance, which may be normalized. The first derivative of the pseudo-absorbance can then be used to find peaks.

The device may further include a camera capturing a view of the lens material pieces, such that tracking of lens material pieces and correlation of lens material pieces identified with the camera with measurements by the spectrometer device is possible.

Furthermore, a method for inspecting lens material pieces is provided comprising moving lens material pieces to be inspected through an inspection area, in the inspection area illuminating the lens material pieces with light provided in a diverging manner by a light providing element through the lens material pieces and analyzing the light passing through the lens material pieces spectrally. The method is characterized in that the light providing element is stationary.

The method may be performed using the above devices.

The method may, for example, then compromise classifying the lens material pieces according to their material. This method may be part of a method for lens production, where lens material pieces are classified with the method during production and then the further use of the lens material pieces (discarding, further processing, recycling etc.) is made based on the classification.

Embodiments will be further illustrated referring to the attached drawings, wherein:
Fig. 1 is a diagram of a device according to an embodiment,
Fig. 2 is a diagram for illustrating optical and geometrical properties according to some embodiments,
Fig. 3 is a perspective view of a device according to an embodiment,
Fig. 4 is a perspective view of a device according to a further embodiment,
Figs. 5A to 5C are diagrams illustrating the effect of refraction,
Figs. 5D and 5E are diagrams for illustrating spot variations due to refraction,
Fig.6A to 6C are comparative examples without divergence,
Fig.7 is an example measurement result,
Fig. 8 is a diagram illustrating evaluation of measurement results,
Figs.9A and 9B are diagrams for illustrating geometrical features, and
Fig. 10 is a flowchart illustrating a method according to an embodiment.

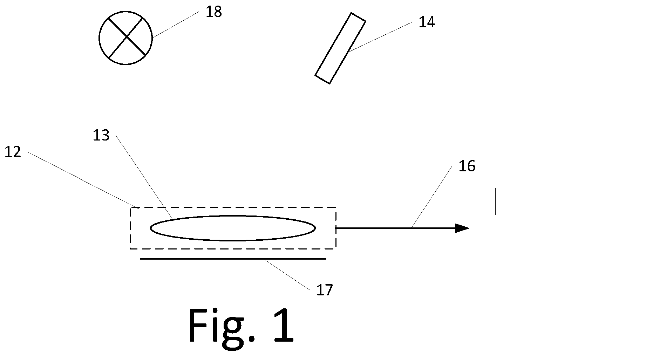

Fig. 1 is a schematic diagram of a device according to an embodiment. A carrying device 12 carries a lens 13, which is an example for a lens material piece, and transports it in a direction generally indicated by an arrow 16. A light source 18 illuminates lens 13, and light passing from light source 18 through lens 13 reaches a diffuse reflector 17. Diffuse reflector 17 diffusely reflects the light, which passes through lens 13 again. A part of this light then reaches a spectrometer device 14 and is analyzed, for example to determine one or more materials of lens 13, like a base material or coating materials. Alternatively, light source 18 may be omitted, and element 17 may be a light source which emits light in a diverging manner, as explained above in the summary section. In both cases, as element 17 is stationary, reference measurements without lens 13 may be made essentially with the same spot of element 17 as later used for the actual measurement.

In the following embodiments, a diffuse reflector is used as light providing element, with the understanding that in alternate embodiments the diffuse reflector may be replaced by a diverging light source.

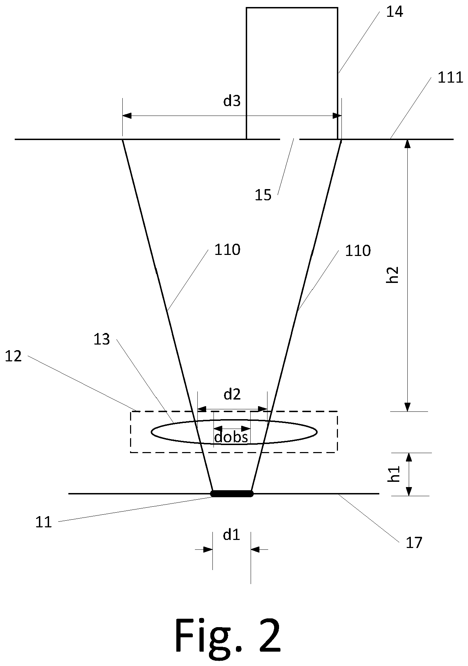

Fig. 2 is a diagram for illustrating some geometrical aspects of the device of Fig. 1. In this embodiment, spectrometer device 14 observes light coming from a spot 11 on diffuse reflector 17, where spot 11 is part of a greater area of diffuse reflector 17 illuminated by light source 18 through lens 12, and which is then observed by spectrometer device 14.

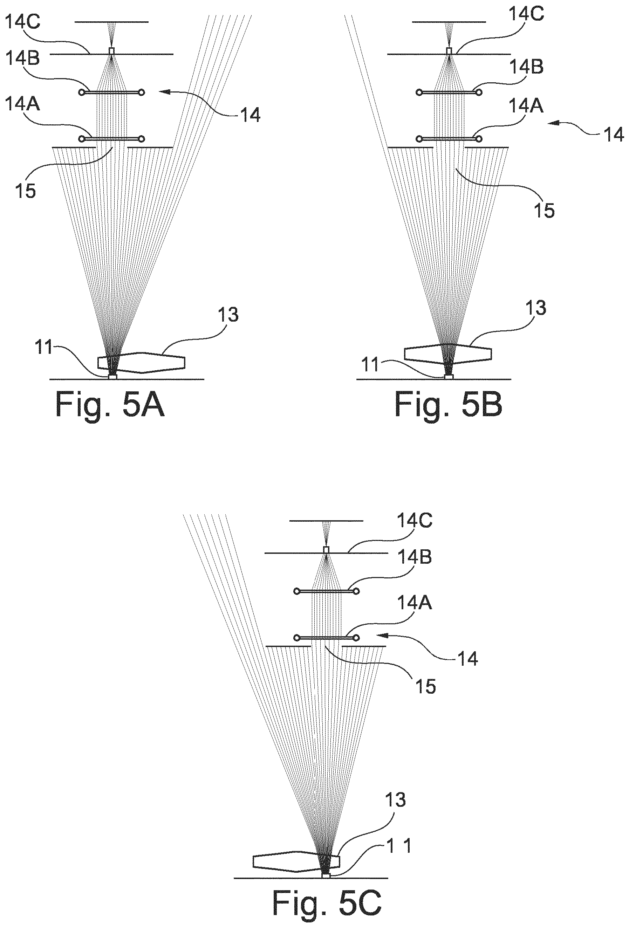

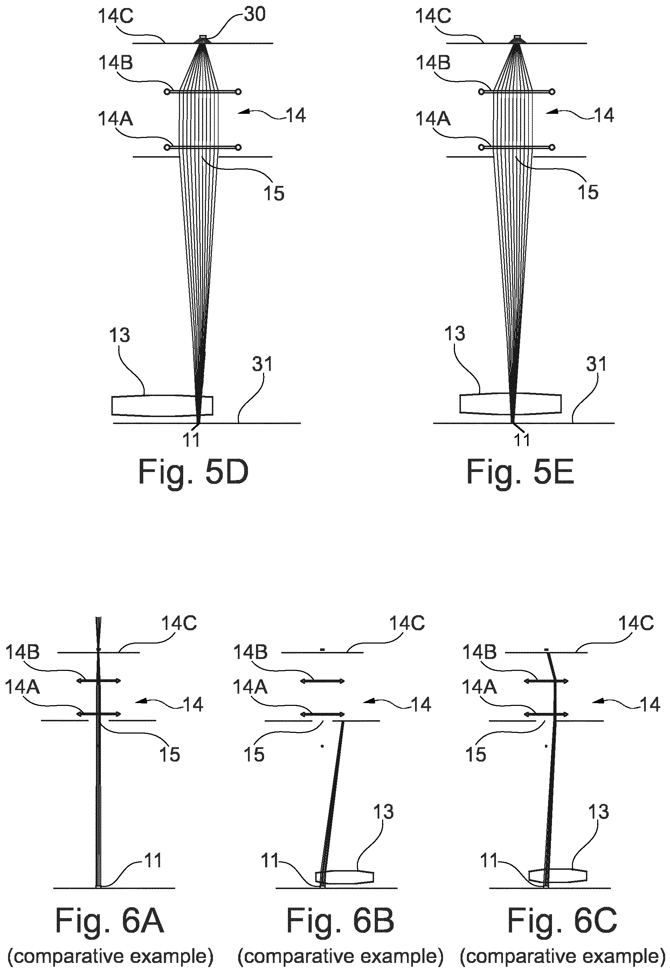

The size of spot 11, is essentially determined by the optical properties of spectrometer device 14, for example the aperture size and numerical aperture of the spectrometer and the properties of a telescope optics. As diffuse reflector provides a diffuse reflection, the light provided to spot 11 by light source 18 is diffusely reflected, forming a widening cone marked by lines 110. From a diameter d1 of spot 11, the beam widens to a diameter d2 at lens 13 and to a diameter d3 at a light capturing entrance 15 of spectrometer device 14. In the example of telescope, the geometry of a part of the diverging light cone 110 that is actually captured by the spectrometer device, is determined by the diameter of a telescope lens that constitutes the light capturing entrance of the spectrometer device and the focal length of this lens of the telescope. In this case, a diameter dobs observed on lens 13 is smaller than d2. Note that in the simple representation of Fig. 2 refractive properties of lens 13 are neglected, but these will be explained later referring to Figs. 5A to 5C and 6A to 6C. As will be explained there, by using the widening cone 110 which makes d2 lager than dobs and causes an even larger d3, even if the direction of the beam is changed by refractive properties of lens 13 still light reaches beam capturing entrance 15.

h1 denotes a distance between diffuse reflector 17 to carrier device 12, and h2 denotes a distance from carrier device 12 to a plane 111 in which the light capturing entrance 15 is located.

The optical system, e.g. the above-mentioned telescope, and h1 are selected such that d2 is not much greater than d1, for example that d2 does not exceed d1 by more than 600%. This means that the diameter of the beam at lens 13 is comparatively small, which allows a local examination of lens 13. To this end, h1 for example may be 0.5cm or less, and d1 may be of the order of 0.2cm or smaller.

On the other hand, diameter d3 may exceed diameter d1 by more than 1000% or preferably by more than 2600%. Having a large diameter d3 ensures that even with refractive effects of lens 13, which will be described further below and which may lead to a change of direction of the light beam delimited by lines 110, light of the light beam reaches light capturing entrance 15 and therefore spectrometer device 14. This ensures that lens material pieces with different refractive properties may be examined, and an exact placement of lens 13 in or on carrier device 12 is also not necessary.

The relationships between d1, d2 and d3 result from the distances h1 and h2 and the properties of the optical system coupling light into the spectrometer. To keep a shift in the position of spot 11 small upon the introduction of lens 13 (see explanations below with reference to Figs. 5D and 5E), h1 is chosen to be small. For example, in some embodiments h1 is smaller than 20% of h2. Values of h1 and h2 may be determined mathematically based on properties of lens material pieces to be examined, or experimentally, i.e. different lens material pieces may be placed and, for example, h2 may be varied until for lens material pieces light reaches the light capturing entrance15.

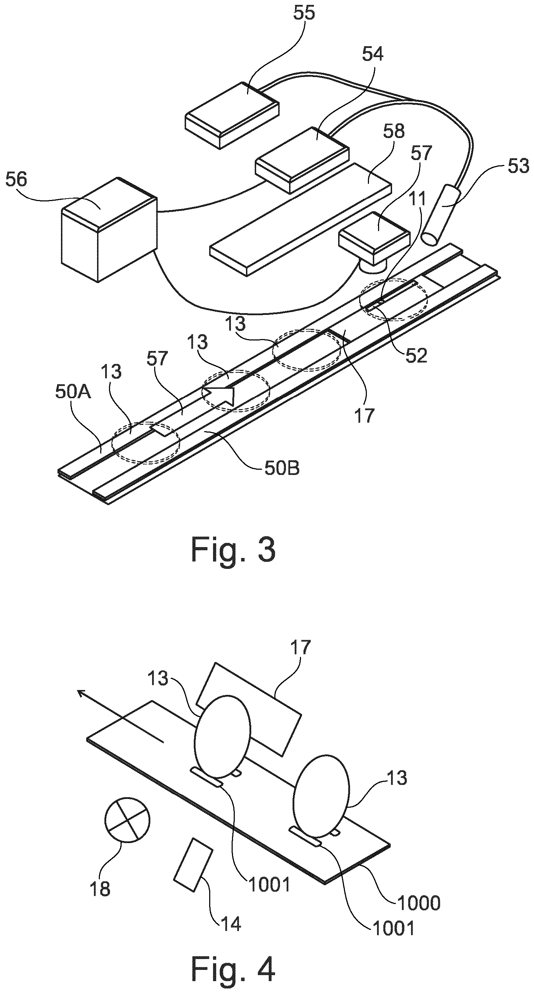

Fig. 3 illustrates a device according to a further embodiment, which is a specific implementation of the device of Fig. 1. The device of Fig. 3, as carrier device, comprises a conveyor belt, having a first track 50A and a second track 50B which move together in a direction indicated by an arrow 15. Lenses 13 to be examined are placed on the conveyor belt bridging first track 50A and second track 50B. A diffuse reflector 17 is placed between first track 50A and second track 50B and may be placed slightly below the level of a surface of first track 50A and second track 50B (for example in the distance h1 of Fig. 2) such that when the conveyor belt moves, lenses 13 do not touch diffuse reflector 17. When tracks50A, 50B move, diffuse reflector 17 remains stationary.

The device of Fig. 3 furthermore comprises a halogen lamp 58 as an example for light source 18. A collection optics 53 collects light from a spot 11. Collection optics 53 is implemented as a telescope optics. Furthermore, the device of Fig.3 comprises two spectrometers 54, 55, which receive light from collection optics 53 via fibers. Spectrometer 54 may be a spectrometer operating in the visible range and part of the near-infrared range, whereas spectrometer55 is a spectrometer operating over a broader range in the near infrared. Generally, using spectrometer 55 material properties of a base material of lenses 13 may be detected, and using spectrometer 55 materials used for coatings may be discriminated.

Furthermore, the device of Fig. 3 comprises a camera 57, which may be omitted in other embodiments. A processor device 56, here a computer, controls operation of the device and receives data from spectrometers 54, 55 for evaluation. In particular, during operation processor device 56 may control camera 57 to capture overview images which are used to track lenses 13. Furthermore, processor device 56 controls spectrometers 54, 55 to repeatedly measure spectra at several points along a line 52 across each lens 13. Between lenses 13, furthermore reference spectra may be captured which represent light from diffuse reflector 17 without a lens being present. As diffuse reflector 17 is stationary, this reference measurement may be taken at the same or almost the same point (spot 11) as the actual measurements.

Fig. 4 shows an alternative setup of a device. Here, lenses 13 are held in an upright position on a conveyor belt 1000 by holders 1001. Light source 18 and spectrometer device 14 are placed on one side of the conveyor belt, and diffuse reflector 17 is placed on the other side the conveyor belt 1000. This shows that different geometries are possible to obtain moving lenses (which enables a high throughput) together with a stationary diffuse reflector. Other elements of Fig. 3, like computer 56, two different spectrometers or a camera, may also be employed in the device of Fig. 4.

Next, with respect to Figs. 5A to 5E as well as Fig. 6A to 6C as comparative examples, the significance of using a diffuse reflector leading to a diverging light beam for the inspection of lens material pieces will be explained. In these figures, spectrometer device 14 is represented as comprising the light capturing entrance 15 as an aperture, followed by a telescope optics 14A, 14B which focus the light beam onto an entrance aperture 14C of the spectrometer device, which may for example be the entrance of a fiber optic to provide the light signal to spectrometers.

Figs. 5A, 5B and 5C show a lens 13 at various positions with respect to spot 11, for example when lens 13 is moved by the conveyor belts shown in Figs. 3 or 4. Due to refractive properties of the lens, this movement changes the general direction of the diverging beam originating from spot 11, as shown in Figs. 5A, 5B and 5C. However, due to the divergence of the beam, always light falls through light capturing entrance 15 and reaches points 14D.

In contrast, in the comparative example of Fig. 6A to 6C, a non-diverging light beam originating from spot 11 is used. Without a lens, as shown in Fig. 6A, this beam goes through the center of light capturing entrance 15 and therefore ultimately reaches spot 14D (not shown in Figs. 6A to 6C). However, depending on the lens position, as shown in Fig. 6B the light beam is refracted such that it does not pass through light capturing entrance 15, whereas for example for the lens position of Fig. 6C, it does pass through light capturing entrance 15. Therefore, without diverging light beams which are caused by the diffuse reflector, measurements may fail if due to refraction of the lens the light beam does not light capturing entrance 15.

Above, it was also noted that the spot for reference measurements and the actual measurements is approximately at the same spot, but variations are possible due to the refractive property of lenses. This is explained with respect to Figs. 5D and 5E, where for the purpose of demonstration a light source 30 is set at the aperture 14C, such that in these representation light travels from the aperture 14C to a plane 31 of the diffuse reflector. As can be seen in Figs. 5D and 5E, the resulting spot 11 is not exactly in the same position for different positions of lens 13. Nevertheless, even with these variations, reference measurements may be made more precisely compared to the prior art where the positions differ significantly.

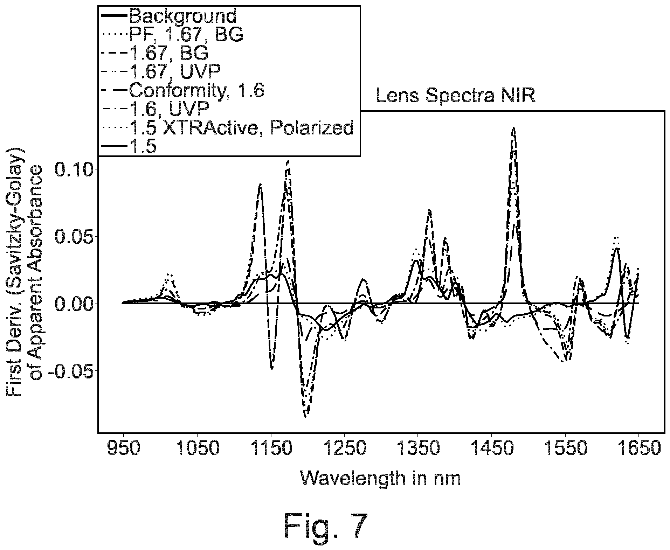

Fig. 7 shows example spectra for different materials and coating materials in the infrared, where the first derivative of the apparent absorbance calculated as explained above is shown, together with a background measurement (solid line) where no lens material piece was present. As can be seen, the peaks vary between materials, thus allowing a classification.

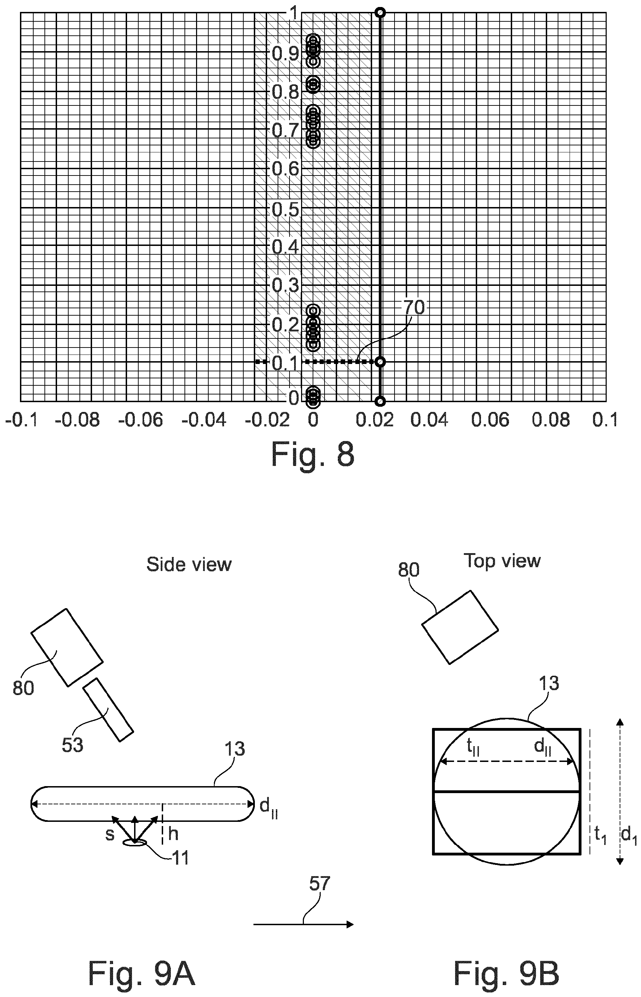

As explained with reference to Fig. 3, a plurality of measurements may be made along a line. This may help to make the measurement more robust. Fig. 9 illustrates different measurement points relating to different materials, and a threshold 70 separates classes of materials from each other. In this exemplary instance the cosine distance between the first derivative of the apparent absorption is used to demonstrate the possibility for accurate classification of different materials. For example, to decide that a lens material piece examined comprises a certain material, it is required that at least from a certain percentage, for example 25% of the measurements, a material may be identified (for example based on spectra as shown in Fig. 7), and of these assigned at least 90% show the same material. Of course, the percentages may vary, and for example reference lens material pieces of known materials may be made for calibration purposes.

Figs. 9A and 9B show the measurement geometries of Fig. 3 in a side view of Fig. 9A and a top view of Fig. 9B, where the measurement spot 11 in the absence of lens 13 is shown, which as explained above may vary slightly due to refractive properties of lens 13. Fig. 9B shows the measurement along a line. Reference numeral 80 summarizes the detectors, for example spectrometers 54, 55 of Fig. 3. The following parameters are shown in Figs. 9A and 9B:
*d*_{┴} diameter of lens perpendicular to direction of travel;
*l*_{┴} length of lens from midpoint of *d*_{┴} within which the measurement spot will fall (controlled through the mechanics of the lens placement);
*d*_{||} diameter of lens parallel to direction of travel;
*l*_{||} length of lens in the parrel direction over which >10% of the light collected without the lens is collected with the lens, which defines the fraction of the chord of the lens from which measurements can be made, e.g. line 52 of Fig. 3; and
*h* distance between light source (rear diffuser or light) and back of lens, essentially corresponding to h1 of Fig. 2.

Further, if *I*₀ is the total light intensity collected (over all wavelengths) from measurement spot 11 without lens 13 present and *Iₗ* is the total light intensity collected (over all wavelengths) from measurement spot 11 with lens 13 present, an efficiency *eff* is $\frac{{I}_{l}}{{I}_{0}}$.

The parameters like h explained above and a parameter s defining the angular distribution (i.e. opening angle of the light beam shown e.g. in Fig. 2 and determined by properties of reflective diffuser 17 or other light providing element) may be determined such that for lens material pieces to be examined, essentially always (i.e. above a given percentage of the cases like above 90%) light reaches the respective spectrometer device regardless of the placement and shape of the lens material piece:
The devices explained above, for example as shown in Fig. 3 or 4, may have dimensions and weights making them portable, such that they may e.g. be transported to an optician to classify lens material pieces accumulated there over time and then be transported back again. For such embodiments, optical systems (e.g. the telescope optics mentioned above) are designed allowing the total separation from the reflector to the input of the spectrometer to be less than 30cm. For example, device dimensions may be such that the devices may be transported by car to a location where they are needed.

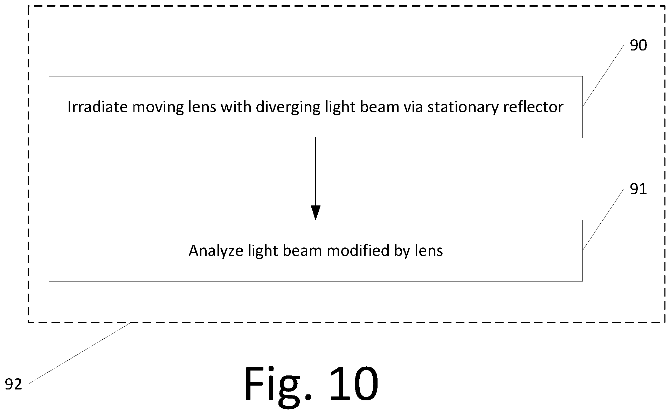

Fig. 10 shows a flowchart illustrating a method according to an embodiment. The method is performed using the devices explained above, such that corresponding properties will not be discussed again. The method of Fig. 10 may be part of a manufacturing process 92, for example to inspect manufactured lenses or to classify discarded lens material pieces to be able to reuse them.

In step 90, moving lens material pieces, for example lenses 13 transported on the conveyor belts discussed, are irradiated with diverging light beams via a light providing element, for example via a stationary diffuse reflector like diffuse reflector 17 or, alternatively, via a stationary diverging light source in place of diffuse reflector 17. At step 91, the method comprises analyzing the light beam as modified by the lens (by passing through the lens), for example with the spectrometer devices discussed, to determine material properties.

## Claims

1. A device suitable for inspecting lens material pieces (13), comprising,
a carrying device (12) configured to transport lens material pieces (13) to be inspected through an inspection area,
a light providing element (17) at a first side of the carrying device (12) and configured to provide a diverging illumination, and
a spectrometer device (14) at a second side of the carrying device opposite the first side configured to analyze light which passes from the light providing element through a lens material piece (13) in the inspection area,
**characterized in that**
the light providing element (17) is stationary with respect to the light source (18, 58) and the spectrometer device (14).

2. The device of claim 1, **characterized in that** the light providing element (17) is arranged at a position such that the lens material pieces (13) do not touch the light providing element (17).

3. The device of claim 1 or 2, **characterized in that** the carrying device (12) comprises a conveyor belt with a first track (50A) and a second track (50B) parallel to the first track (50A) and configured to carry the lens material pieces (13) bridging the first track (50A) and the second track (50B) , and **in that** the light providing element (17) is positioned in a gap between the first track (50A) and the second track (50B).

4. The device of any one of claims 1 to 3, **characterized in that** the spectrometer device (14) is configured to analyze light which is diffusely reflected from a spot (11) on light providing element (17).

5. The device of claim 4, **characterized in that** the light providing element (17) is arranged to provide a diverging light beam which widens from a diameter at the spot (11) by no more than 600% at the lens material piece (13) and by more than 1000% at a light capturing entrance (15) of the spectrometer device (14).

6. The device of claim 5, **characterized in that** a distance of the light providing element (17) from the carrying device is smaller than 20% of a distance between the carrying device and the light capturing entrance (15) of the spectrometer device (14)

7. The device of any one of claims 1 to 6, **characterized in that** the spectrometer device (14) is configured to collect and analyze light from the lens material piece (13) in the inspection area repeatedly while the lens is moved by the lens carrying device through the inspection area.

8. The device of any one of claims 1 to 7, **characterized in that** the device is portable.

9. The device of claim 8, **characterized in that** a distance between the light providing element (17) and a light capturing entrance (15) of the spectrometer device (14) is 30cm or less.

10. The device of any one of claims 1 to 9, **characterized in that** the light providing element (17) comprises a diffuse reflector, and **in that** the device further comprises a light source (18; 58) arranged to illuminate the diffuse reflector.

11. The device of any one of claims 1 to 9, **characterized in that** the light providing element (17) comprises a light source configured to generate a diverging light beam.

12. A method suitable for inspecting lens material pieces (13) comprising:
moving lens material pieces (13) to be inspected through an inspection area,
in the inspection area, illuminating the lens material pieces with light provided in a diverging manner by a light providing element (17) through the lens material pieces (13); and
analyzing the light passing through the lens material pieces spectrally,
**characterized in that** the light providing element (17) is stationary.

13. The method of claim 10, **characterized in that** the method further comprises classifying the lens material pieces (13) according to their material.

14. The method of claim 12 or 13, **characterized in that** the light providing element (17) comprises a diffuse reflector, and **in that** the method further comprises illuminating the diffuse reflector with light such that the diffuse reflector provides the light in a diverging manner.

15. A method suitable for lens production, **characterized in that** the method comprises producing lenses (13), and inspecting at least one of the produced lenses (13) and lens material scrap pieces generated during the production of the lenses using the method of claim 10 or 11.
